# EUROPÄISCHE PATENTSCHRIFT

(11) **EP 3 900 915 B1**
(45) Veröffentlichungstag und Bekanntmachung des Hinweises auf die Patenterteilung: **02.08.2023**
(21) Anmeldenummer: 21163854.9
(22) Anmeldetag: 22.03.2021
(51) Int. Cl.: B29C 51/42, B29C 51/46, B65B 7/16, B65B 9/04, B65B 47/02, B65B 47/04, B65B 47/10, B65B 57/02, B29C 51/26, B29C 65/00, B65B 55/00, B65B 61/06

(54) **ARBEITSSTATION MIT MEHRLAGIGEM HEIZSYSTEM FÜR EINE VERPACKUNGSMASCHINE**
WORK STATION WITH MULTILAYER HEATING SYSTEM FOR A PACKAGING MACHINE
POSTE DE TRAVAIL POURVU DE SYSTÈME DE CHAUFFAGE MULTICOUCHE POUR UNE MACHINE D'EMBALLAGE

(30) Priorität: 15.04.2020 DE 102020204751
(43) Veröffentlichungstag der Anmeldung: 27.10.2021
(73) Patentinhaber: MULTIVAC Sepp Haggenmüller SE & Co. KG, 87787 Wolfertschwenden (DE)
(72) Erfinder: CLEMENS, Stephen, 87435 Kempten (DE); RENNER, Dr. Ingo, 87435 Kempten (DE); NAPRAVNIK, Christian, 83026 Rosenheim (DE)
(74) Vertreter: Grünecker Patent- und Rechtsanwälte PartG mbB

(56) Entgegenhaltungen:
- EP-A1- 3 369 554
- DE-A1-102009 041 563

## Beschreibung

Die vorliegende Erfindung betrifft eine beheizte Arbeitsstation für eine Verpackungsmaschine, welche bahnförmiges Material verarbeitet.

Aus der DE 10 2009 041 563 A1 ist eine Tiefziehverpackungsmaschine bekannt, deren Formstation eine Heizung spezieller Bauart aufweist. Die Tiefziehverpackungsmaschine weist die Formstation, eine Siegelstation, eine Querschneideeinrichtung und eine Längsschneideeinrichtung auf, die in dieser Reihenfolge in einer Arbeitsrichtung an einem Maschinengestell angeordnet sind. Eine Folienbahn wird von einer eingangsseitig an dem Maschinengestell angebrachten Zufuhrrolle abgezogen und mittels einer Vorschubeinrichtung entlang der Arbeitsrichtung durch die einzelnen Bearbeitungsstationen transportiert. In der Formstation werden in der Folie durch Tiefziehen Mulden geformt. In der Siegelstation werden die Mulden durch Ansiegeln einer Oberfolie verschlossen. Die Querschneideeinrichtung und die Längsschneideeinrichtung trennen die verschlossenen Mulden aus dem Folienverbund. Die Formstation umfasst ein Formwerkzeugoberteil und ein relativ zu dem Formwerkzeugoberteil anhebbares Formwerkzeugunterteil mit Formmulden. In dem Formwerkzeugoberteil ist an der Unterseite eine Heizplatte angebracht. Auf der Heizplatte ist eine Vielzahl von gleichmäßig verteilten Heizelementen angeordnet. Die Heizelemente sind durch eine Steuerung individuell ansteuerbar, um unterschiedliche Bereiche der Folie auf unterschiedliche Temperaturniveaus zu bringen, welche passend zu dem darauffolgenden Formprozess erzeugt werden können, um gewünschte Wandstärken und Verformungen der geformten Mulde zu erhalten.

Aus der DE 10 2006 045 327 A1 ist eine weitere Tiefziehverpackungsmaschine mit einem Heizelement bekannt, welches einzeln von einem Steuerelement ansteuerbare Heizmittel aufweist, um ein bestimmtes Temperaturprofil in der Folie zu erzielen.

Die DE 10 2005 018 652 A1 beschreibt eine Heizvorrichtung für die Erwärmung thermoplastisch verformbarer Folien, die einer Thermoformmaschine zugeführt werden. Auf einer als Heizplatte ausgebildeten Trägerplatte sind Wärmequellen regelmäßig auf den Gitterplätzen eines fiktiven Gitters angeordnet. Jede der Wärmequellen ist über eine Schaltleitung mit einer Schalteinheit zum flexiblen Schalten des Betriebszustands unabhängig von den anderen Wärmequellen verbunden. Durch diese Gestaltung soll abhängig von der Fläche und den Abmessungen des zu erwärmenden Gebildes die aktive Fläche der Heizvorrichtung festlegbar sein, um einen Formatwechsel zu vereinfachen.

Die DE 102 52 019 A1 beschreibt ein Verfahren zum Erwärmen der Werkzeuge oder der Folie in einer Tiefzieh- oder Siegelstation einer Verpackungsmaschine. Ein entsprechendes Werkzeug weist als Heizelement einen Formkörper, vorzugsweise eine Platte, mit mehreren elektrisch leitenden Stegen auf. Jeder der Stege ist elektrisch individuell ansteuerbar. Der Formkörper kann eine Folie oder ein Film sein.

Die EP 3 369 554 A1 beschreibt eine Formstation zum Formen oder Tiefziehen von Näpfen in einer Folienbahn. Einer Formvorrichtung ist bezüglich der Förderrichtung eine Heizvorrichtung vorgelagert. Die Heizvorrichtung besteht bevorzugt aus zwei Heizplatten, einer ersten oder oberen Heizplatte und einer zweiten oder unteren Heizplatte. Die erste und die zweite Heizplatte sind parallel zueinander und voneinander beabstandet angeordnet. Dazwischen ist die Folienbahn angeordnet. Des Weiteren umfasst die erste Heizplatte eine Vielzahl von Heizelementen und die zweite Heizplatte umfasst eine Vielzahl von Heizelementen.

Aus dem Stand der Technik bekannte Heizsysteme für Verpackungsmaschinen mit mehreren individuell ansteuerbaren Heizelementen sind weitgehend flexibel einsetzbar und an unterschiedliche Produktionsvorgänge anpassbar. Es muss jedoch sichergestellt werden, dass durch die individuell ansteuerbaren Heizelemente eine ausreichende Heizleistung bereitgestellt wird, um die zur Verarbeitung des Materials erforderliche Temperatur zu erreichen. Dies kann insbesondere dann problematisch sein, wenn eine große Anzahl einzelner Heizelemente vorgesehen werden soll, um ein möglichst fein anpassbares Beheizungsmuster zu erreichen.

Es ist Aufgabe der Erfindung, aufzuzeigen, wie mit technisch möglichst einfachen Mitteln eine anpassbare Beheizung zum Erwärmen eines bahnförmigen Materials in einer Verpackungsmaschine mit ausreichender Leistung erreicht wird.

Diese Aufgabe wird jeweils durch eine Arbeitsstation gemäß Anspruch 1, durch ein Verfahren gemäß Anspruch 9 und durch eine Verwendung gemäß Anspruch 14 gelöst. Die abhängigen Ansprüche geben vorteilhafte Ausführungsformen der Erfindung an.

Gemäß einem Aspekt der Erfindung wird eine Arbeitsstation für eine Verpackungsmaschine bereitgestellt. Die Arbeitsstation umfasst ein Heizsystem zum Erwärmen eines bahnförmigen Materials. Das Heizsystem umfasst eine erste Heizlage mit einer Heizeinrichtung. Das Heizsystem umfasst eine zweite Heizlage mit einer Vielzahl von Heizelementen. Die zweite Heizlage ist bezüglich der ersten Heizlage ortsfest angebracht. Die erste Heizlage und die zweite Heizlage liegen bezüglich einer Stapelrichtung übereinander vor. Mehrere der Heizelemente liegen innerhalb einer Projektion der Heizeinrichtung bezüglich der Stapelrichtung auf der zweiten Heizlage.

Die Heizeinrichtung der ersten Heizlage überlappt bezüglich der Stapelrichtung mehrere der Heizelemente der zweiten Heizlage. Die Heizeinrichtung kann die von den Heizelementen der zweiten

Heizlage bereitgestellte Heizleistung ergänzen. Aufgrund der durch die Heizeinrichtung bereitgestellten zusätzlichen Heizleistung können die Heizelemente der zweiten Heizlage kleiner (mit einer geringeren maximalen Heizleistung) dimensioniert werden, als wenn die erste Heizlage mit der ersten Heizeinrichtung nicht vorgesehen wäre. Da die zweite Heizlage bezüglich der ersten Heizlage ortsfest angebracht ist, ist gut vorhersehbar, wie sich die von der Heizeinrichtung und der Vielzahl von Heizelementen bereitgestellten Heizleistungen kombinieren und zusammen zum Erwärmen des bahnförmigen Materials beitragen.

Die Heizeinrichtung kann eine elektrische Heizeinrichtung sein. Die Heizeinrichtung kann als elektrische Widerstandsheizeinrichtung ausgebildet sein. Die Heizelemente können elektrische Heizelemente sein. Die Heizelemente können als elektrische Widerstandsheizelemente ausgebildet sein.

Die Heizelemente können einzeln oder gruppenweise individuell ansteuerbar sein. Eine Steuereinheit der Arbeitsstation oder der Verpackungsmaschine kann dazu konfiguriert sein, die Heizelemente einzeln oder gruppenweise individuell anzusteuern. "Einzeln oder gruppenweise individuell ansteuern" umfasst die Variante, dass die Heizelemente einzeln ansteuerbar sind, aber nicht gruppenweise, die Variante, dass die Heizelemente gruppenweise individuell ansteuerbar sind, aber nicht einzeln, und die Variante, dass die Heizelemente sowohl einzeln individuell ansteuerbar sind als auch gruppenweise individuell ansteuerbar sind. Durch geeignetes individuelles Ansteuern der Heizelemente lässt sich ein dem jeweiligen Bedarf angepasstes Beheizungsprofil variabel einstellen. Die Heizeinrichtung kann eine gewisse Grundheizleistung bereitstellen. Die Heizelemente können eine zusätzliche Heizleistung bereitstellen, welche ortsangepasst zu der Grundheizleistung hinzukommt.

Ein Ansteuern eines Heizelements kann ein wahlweises Aktivieren oder Deaktivieren des Heizelements umfassen. Durch Aktivieren bzw. Deaktivieren bestimmter Heizelemente lässt sich erreichen, dass bestimmte Bereiche stärker erwärmt werden als andere Bereiche. Ein Ansteuern eines Heizelements kann ein Anpassen einer Heizleistung des Heizelements umfassen. Durch ein individuelles Anpassen der Heizleistungen der Heizelemente lässt sich die Beheizung ortsaufgelöst besonders genau anpassen. Die Heizelemente können beispielsweise individuell angesteuert werden, um die Heizleistung an das zu verarbeitende bahnförmige Material anzupassen und/oder um die Heizleistung an eine Geometrie einer herzustellenden Verpackung anzupassen.

Eine von der Heizeinrichtung bereitgestellte Heizleistung kann größer sein als die von den Heizelementen zusammen bereitgestellte Heizleistung. Im Falle einer elektrischen Heizeinrichtung und elektrischer Heizelemente kann die Heizeinrichtung mit einer größeren elektrischen Spannung betrieben werden als die Heizelemente. Beispielsweise kann die Heizeinrichtung mit einer Spannung in einem Bereich von 200 V bis 240 V betrieben werden. Beispielsweise können die Heizelemente mit einer Spannung in einem Bereich von 20 V bis 55 V betrieben werden.

Die Heizelemente können in der zweiten Heizlage matrixartig oder rasterartig angeordnet sein. Eine matrixartige oder rasterartige Anordnung der Heizelemente ermöglicht eine besonders große Flexibilität in der Anpassbarkeit des bereitgestellten Heizmusters. Da die Heizelemente durch die Heizeinrichtung unterstützt werden, können die Heizelemente kleiner gewählt werden, wodurch sich ein feineres Raster realisieren lässt.

Die Heizelemente können in der zweiten Heizlage jeweils unterschiedliche Heizkonturen definieren. Die Heizelemente können auf der zweiten Heizlage jeweils in Form einer von dem Heizelement bereitgestellten Heizkontur verlaufen. Durch von den Heizelementen bereitgestellte unterschiedliche Heizkonturen lässt sich ein auf die Geometrie der herzustellenden Verpackung abgestimmtes Beheizungsmuster realisieren. Die Heizelemente können jeweils eine Flächenform aufweisen. Die Heizelemente können sich jeweils linien- oder pfadartig auf der zweiten Heizlage erstrecken. Von unterschiedlichen Heizelementen bereitgestellte Heizkonturen können konzentrisch sein.

Die Arbeitsstation kann einen Aufnahmeraum für das bahnförmige Material umfassen. Die erste Heizlage, die zweite Heizlage und der Aufnahmeraum können bezüglich der Stapelrichtung übereinander liegen. Die Verpackungsmaschine kann eine Fördereinrichtung umfassen, welche dazu konfiguriert ist, das bahnförmige Material durch den Aufnahmeraum der Arbeitsstation zu fördern. In dem Aufnahmeraum kann das bahnförmige Material zumindest im Wesentlichen parallel zu der ersten Heizlage und/oder der zweiten Heizlage vorliegen. Wenn die erste Heizlage, die zweite Heizlage und der Aufnahmeraum bezüglich der Stapelrichtung übereinander liegen, überlappt die von der ersten Heizlage bereitgestellte Heizleistung in dem Aufnahmeraum mit der von der zweiten Heizlage bereitgestellten Heizleistung.

Die erste Heizlage und die zweite Heizlage können sich zumindest im Wesentlichen parallel zueinander erstrecken. Die erste Heizlage und/oder die zweite Heizlage können sich zumindest im Wesentlichen senkrecht zu der Stapelrichtung erstrecken.

Die erste Heizlage und die zweite Heizlage liegen bezüglich der Stapelrichtung auf derselben Seite des Aufnahmeraums.

Die zweite Heizlage kann bezüglich der Stapelrichtung näher an dem Aufnahmeraum liegen als die erste Heizlage. Wenn die zweite Heizlage bezüglich der Stapelrichtung näher an dem Aufnahmeraum liegt als die erste Heizlage, können die Heizelemente der zweiten Heizlage das in dem Aufnahmeraum vorliegende bahnförmige Material besonders effizient beheizen. Dies ist insbesondere vorteilhaft, wenn die Heizelemente möglichst klein ausgebildet werden sollen. Alternativ wäre aber auch denkbar, die erste Heizlage näher an dem Aufnahmeraum vorzusehen, als die zweite Heizlage.

Die zweite Heizlage kann als Substrat zum Aufnehmen der Heizelemente ein Foliensubstrat oder eine Substratplatte aufweisen. Das Substrat kann starr oder flexibel sein. Insbesondere kann das Substrat ein flexibles Foliensubstrat sein. Das Substrat kann hitzebeständig sein.

Die erste Heizlage kann als Substrat zum Aufnehmen der Heizeinrichtung ein Foliensubstrat oder eine Substratplatte aufweisen. Das Substrat kann starr oder flexibel sein. Insbesondere kann das Substrat ein flexibles Foliensubstrat sein. Das Substrat kann hitzebeständig sein.

Das Heizsystem kann eine Ansteuerungslage umfassen. Die Ansteuerungslage kann Komponenten zum Ansteuern der Heizeinrichtung und/oder der Heizelemente aufweisen. Die Ansteuerungslage kann Leitungselemente umfassen, welche dazu ausgebildet sind, die Heizelemente einzeln mit elektrischer Leistung zu versorgen. Die Ansteuerungslage kann ein Substrat umfassen, welches die Komponenten zum Ansteuern der Heizeinrichtung und/oder der Heizelemente trägt. Das Substrat kann ein Foliensubstrat oder eine Substratplatte sein oder umfassen.

Das Heizsystem kann zumindest eine Hygienelage umfassen. Eine Hygienelage kann aus einem Material bestehen oder ein Material aufweisen, das für Anwendungen im Lebensmittelbereich zugelassen ist. Die Hygienelage kann bezüglich einer Stapelung der Lagen des Heizsystems in der Stapelrichtung eine äußerste Lage bilden. Vorzugsweise umfasst das Heizsystem zwei Hygienelagen, welche eine obere bzw. untere äußerste Lage der Stapelung der Lagen des Heizsystems bilden.

Zwei oder mehr der Lagen des Heizsystems können fest miteinander verbunden sein. Insbesondere können zwei oder mehr der Lagen des Heizsystems durch Laminieren oder Verschweißen fest miteinander verbunden sein. Die erste Heizlage und die zweite Heizlage können fest miteinander verbunden sein, insbesondere durch Laminieren oder Verschweißen. Die erste Heizlage und/oder die zweite Heizlage können fest mit der Ansteuerungslage verbunden sein. Eine erste Hygienelage kann fest mit einer zweiten Hygienelage verbunden sein. Die erste Hygienelage und die zweite Hygienelage können zwischen sich die erste Heizlage, die zweite Heizlage und die Ansteuerungslage aufnehmen.

Die Verpackungsmaschine kann als Tiefziehverpackungsmaschine ausgebildet sein. Die Tiefziehverpackungsmaschine kann eine Formstation, eine Siegelstation, eine Schneidstation und eine Transporteinrichtung umfassen. Die Transporteinrichtung kann dazu konfiguriert sein, eine Unterfolienbahn entlang einer Produktionsrichtung zunächst der Formstation, dann der Siegelstation und schließlich der Schneidstation zuzuführen. Die Formstation kann dazu konfiguriert sein, durch Tiefziehen Verpackungsmulden in der Unterfolienbahn auszubilden. Die Siegelstation kann dazu konfiguriert sein, die Verpackungsmulden durch Ansiegeln einer Oberfolie an die Unterfolienbahn zu verschließen. Die Schneidstation kann dazu konfiguriert sein, die verschlossenen Verpackungen aus dem Folienverbund zu lösen.

Die Tiefziehverpackungsmaschine kann eine Vorheizstation zum Vorheizen der Unterfolienbahn und/oder eine Vorheizstation zum Vorheizen der Oberfolie aufweisen.

Das bahnförmige Material kann ein bahnförmiges Folienmaterial umfassen. Das bahnförmige Material kann eine thermoplastische Folienbahn umfassen. Das bahnförmige Material kann als in einer Tiefziehverpackungsmaschine verarbeitete Unterfolienbahn oder als in einer Tiefziehverpackungsmaschine verarbeitete Oberfolie ausgebildet sein.

Die Arbeitsstation kann als Formstation oder als Siegelstation einer Tiefziehverpackungsmaschine ausgebildet sein. Die Arbeitsstation kann als Vorheizstation einer Tiefziehverpackungsmaschine ausgebildet sein.

Die Erfindung betrifft auch eine Verpackungsmaschine, insbesondere eine Tiefziehverpackungsmaschine, mit der beschriebenen Arbeitsstation.

Gemäß einem weiteren Aspekt betrifft die Erfindung ein Verfahren zum Herstellen einer Verpackung. Das Verfahren umfasst das Einbringen von bahnförmigem Material in eine Arbeitsstation entlang einer Produktionsrichtung. Das Verfahren umfasst das Beheizen des bahnförmigen Materials in der Arbeitsstation mittels einer Heizeinrichtung. Zudem umfasst das Verfahren das Beheizen des bahnförmigen Materials in der Arbeitsstation mittels einer Vielzahl von Heizelementen. Die Heizelemente sind bezüglich der Heizeinrichtung ortsfest angebracht. Die Heizeinrichtung überlappt bezüglich einer zu der Produktionsrichtung senkrechten Stapelrichtung mit der Vielzahl von Heizelementen.

Das Beheizen des bahnförmigen Materials durch die Heizeinrichtung und das Beheizen des bahnförmigen Materials durch die Heizelemente kann gleichzeitig stattfinden oder zumindest zeitlich überlappen.

Die Heizelemente können zum Erzeugen eines gewünschten Beheizungsmusters für das bahnförmige Material einzeln oder gruppenweise individuell angesteuert werden.

Eine Heizleistung der Heizeinrichtung und/oder eine Heizleistung der Heizelemente kann basierend auf einer Ausgabe eines Temperatursensors gesteuert werden. Der Temperatursensor kann eine Temperatur des bahnförmigen Materials messen. Der Temperatursensor kann eine Temperatur in der Nähe des bahnförmigen Materials messen. Wenn die Heizleistung basierend auf der Ausgabe des Temperatursensors gesteuert wird, lässt sich das Beheizen des bahnförmigen Materials besonders situationsangepasst steuern.

Die Heizleistung der Heizeinrichtung und/oder die Heizleistung der Heizelemente kann basierend auf einem Zeitverlauf der Ausgabe des Temperatursensors gesteuert werden. Der Zeitverlauf der Ausgabe des Temperatursensors kann einen Zeitverlauf der Erwärmung des bahnförmigen Materials wiedergeben.

Basierend auf der Ausgabe des Temperatursensors kann ein Phasenübergang in dem bahnförmigen Material erkannt werden. Beispielsweise kann beim Vorliegen eines Plateaus im Zeitverlauf der Ausgabe des Temperatursensors bei fortgesetzter Beheizung durch die Heizeinrichtung und/oder die Heizelemente auf einen Phasenübergang in dem bahnförmigen Material geschlossen werden. Die Heizleistung der Heizeinrichtung und/oder die Heizleistung der Heizelemente kann basierend auf einem Erkennen des Phasenübergangs gesteuert werden. Beispielsweise kann die Heizleistung der Heizeinrichtung und/oder die Heizleistung der Heizelemente reduziert werden, wenn ein Phasenübergang erkannt wurde. Es wäre auch denkbar, die Heizeinrichtung und/oder die Heizelemente bei einem Erkennen des Phasenübergangs in dem bahnförmigen Material vorübergehend zu deaktivieren.

Gemäß einem weiteren Aspekt betrifft die Erfindung die Verwendung einer bezüglich einer Stapelrichtung mit einer Vielzahl individuell ansteuerbarer Heizelemente überlappenden flächigen und bezüglich der Heizelemente ortsfest angebrachten Heizeinrichtung, um die zum Beheizen eines bahnförmigen Materials erforderliche Heizleistung der Heizelemente in einer Verpackungsmaschine zu reduzieren.

Die Erfindung betrifft, wie ausgeführt, gemäß unterschiedlichen Aspekten eine Arbeitsstation für eine Verpackungsmaschine, ein Verfahren zum Herstellen einer Verpackung und eine Verwendung einer Heizeinrichtung. Bezüglich der unterschiedlichen Aspekte angegebene Merkmale, Vorteile und Erläuterungen lassen sich jeweils auf die anderen Aspekte übertragen.

Im Folgenden wird die Erfindung anhand eines Ausführungsbeispiels weiter erläutert. Dabei zeigt
- Fig. 1: eine schematische Seitenansicht einer Tiefziehverpackungsmaschine mit einer Arbeitsstation gemäß einer Ausführungsform;
- Fig. 2: eine schematische Schnittansicht einer als Formstation ausgebildeten Arbeitsstation gemäß der Ausführungsform;
- Fig. 3: eine schematische Darstellung des Aufbaus des Formwerkzeugoberteils der Formstation gemäß der Ausführungsform;
- Fig. 4: eine schematische Darstellung des Aufbaus des Heizsystems der Arbeitsstation gemäß der Ausführungsform; und
- Fig. 5: eine schematische Darstellung des Temperaturverlaufs einer von der Arbeitsstation gemäß der Ausführungsform verarbeiteten Folienbahn über die Zeit bei fortgesetztem Erwärmen der Folienbahn durch das Heizsystem.

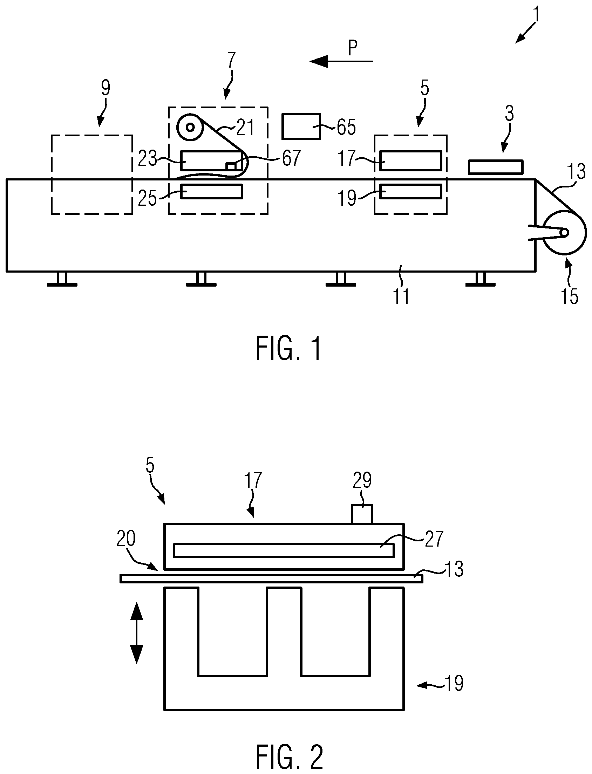

Fig. 1 zeigt eine als Tiefziehverpackungsmaschine ausgebildete Verpackungsmaschine 1 gemäß einer Ausführungsform. Die Verpackungsmaschine 1 umfasst eine Vorheizstation 3, eine Formstation 5, eine Siegelstation 7 und eine Schneidstation 9, die entlang einer Produktionsrichtung P in der genannten Reihenfolge hintereinander an einem Maschinengestell 11 der Verpackungsmaschine 1 angeordnet sind. Eine Unterfolienbahn 13 aus thermoplastischem Kunststoff wird von einer Vorratsrolle 15 abgezogen und mittels einer Fördereinrichtung entlang der Produktionsrichtung P nacheinander der Vorheizstation 3, der Formstation 5, der Siegelstation 7 und der Schneidstation 9 zugeführt. Die Unterfolienbahn 13 wird entsprechend den Arbeitstakten der Formstation 5 und der Siegelstation 7 durch die Fördereinrichtung intermittierend entlang der Produktionsrichtung P gefördert.

In der Vorheizstation 3 wird die Unterfolienbahn 13 erwärmt, um in der Formstation 5 leichter verarbeitbar zu sein. In der Formstation 5 werden durch Tiefziehen Verpackungsmulden in der Unterfolienbahn 13 ausgebildet. Die Formstation 5 umfasst ein Formwerkzeugoberteil 17 und ein Formwerkzeugunterteil 19, welche in einer Schließbewegung entlang einer vertikalen Richtung relativ zueinander aufeinander zu verfahrbar sind und die Unterfolienbahn 13 zwischen sich tiefziehen. In der Formstation 5 kann eine Beheizung der Unterfolienbahn 13 stattfinden, um das Tiefziehen zu vereinfachen.

Zwischen der Formstation 5 und der Siegelstation 7 werden zu verpackende Produkte in die Verpackungsmulden eingelegt. In der Siegelstation 7 werden die Verpackungsmulden durch Ansiegeln einer Oberfolie 21 an die Unterfolienbahn 13 verschlossen. Die Siegelstation 7 umfasst ein Siegelwerkzeugoberteil 23 und ein Siegelwerkzeugunterteil 25, welche bezüglich einer vertikalen Richtung relativ zueinander in eine Schließstellung verfahrbar sind. Das Verschließen der Verpackungsmulden kann unter Vakuum oder Schutzgasatmosphäre erfolgen. In der Siegelstation 7 kann die Oberfolie 21 und/oder die Unterfolienbahn 13 erhitzt werden, um die Oberfolie 21 entlang einer oder mehrerer Siegelnähte mit der Unterfolienbahn 13 zu verbinden.

In der Schneidstation 9 werden die verschlossenen Verpackungen gruppenweise oder einzeln aus dem Folienverbund gelöst. Die Schneidstation 9 kann eine Längsschneideinrichtung und eine Querschneideinrichtung umfassen.

Fig. 2 zeigt eine schematische Schnittansicht durch die Formstation 5 der Verpackungsmaschine 1 aus Fig. 1 mit Blickrichtung entlang der Produktionsrichtung P. In der dargestellten Ausführungsform ist das Formwerkzeugoberteil 17 ortsfest und das Formwerkzeugunterteil 19 entlang einer vertikalen Richtung anhebbar und absenkbar. Das Formwerkzeugunterteil 19 umfasst eine Formmatrize entsprechend der Form der tiefzuziehenden Verpackungsmulden. Fig. 2 zeigt die Situation nachdem der dargestellte Abschnitt der Unterfolienbahn 13 bei geöffneter Formstation 5 (Formwerkzeugoberteil 17 und Formwerkzeugunterteil 19 entlang der vertikalen Richtung voneinander beabstandet) in einen Aufnahmeraum 20 zwischen das Formwerkzeugoberteil 17 und das Formwerkzeugunterteil 19 gefördert wurde. Bei einem Formvorgang wird anschließend das Formwerkzeugunterteil 19 angehoben, so dass die Unterfolienbahn 13 zwischen das Formwerkzeugoberteil 17 und das Formwerkzeugunterteil 19 geklemmt wird. In dem Formwerkzeugoberteil 17 ist ein Heizsystem 27 zum Beheizen der Unterfolienbahn 13 vorgesehen, um die Unterfolienbahn 13 zum Tiefziehen leichter verarbeitbar zu machen. Nach dem Schließen der Formstation 5 kann, gegebenenfalls nach Ablauf einer vorbestimmten Beheizzeit, innerhalb der Formstation 5 in dem Raum über der Unterfolienbahn 13 ein Überdruck erzeugt werden und/oder innerhalb der Formstation 5 in dem Raum unterhalb der Unterfolienbahn 13 ein Unterdruck erzeugt werden, um die Unterfolienbahn 13 in die Formmatrize des Formwerkzeugunterteils 19 tiefzuziehen. In der gezeigten Ausführungsform ist an dem Formwerkzeugoberteil 17 ein Druckluftanschluss 29 vorgesehen, über welchen Druckluft zum Erzeugen des Überdrucks zugeführt wird.

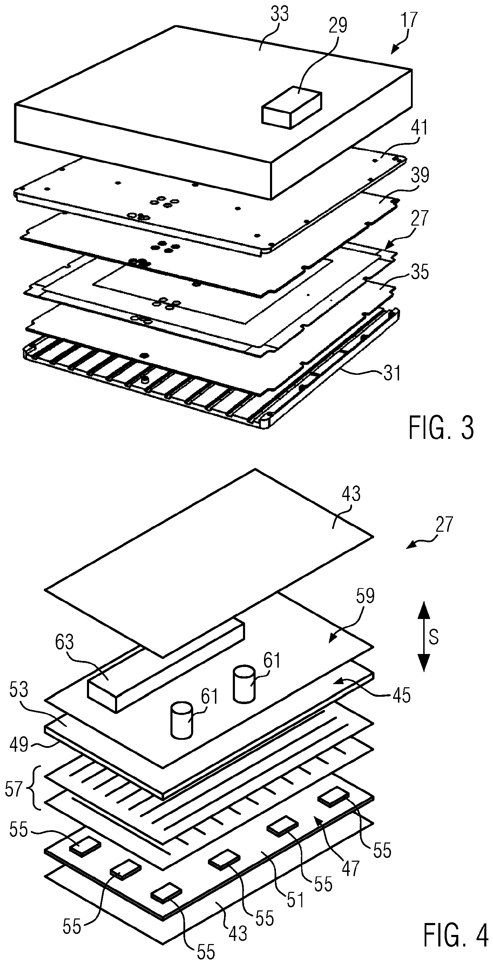

Fig. 3 zeigt schematisch den Aufbau des Formwerkzeugoberteils 17 mit dem darin integrierten Heizsystem 27. Das Formwerkzeugoberteil 17 umfasst ein Gehäuse, welches durch einen Werkzeugboden 31 und einen Werkzeugdeckel 33 mit dem daran angebrachten Druckluftanschluss 29 gebildet wird. Innerhalb des Gehäuses ist das Heizsystem 27 vorgesehen. Das Heizsystem 27 weist eine flächige, plattenartige Form auf. Das Heizsystem 27 kann flexibel sein. Zwischen dem Heizsystem 27 und dem Werkzeugboden 31 ist in der gezeigten Ausführungsform eine Platte 35 aus einem Material mit guter Wärmeleitfähigkeit, wie beispielsweise Aluminium, vorgesehen. Zwischen dem Heizsystem 27 und dem Deckel 33 sind in der gezeigten Ausführungsform eine Stahlplatte 39 und ein Heizplattendeckel 41 vorgesehen. Der Werkzeugboden 31 und der Werkzeugdeckel 33 können beispielsweise mittels Schrauben miteinander verbunden sein. Das Heizsystem 27 kann innerhalb des Gehäuses in seiner Position fixiert sein. Alternativ wäre es denkbar, den Werkzeugboden 31 und die Platte 35 wegzulassen, so dass das Heizsystem 27 direkt mit dem zu bearbeitenden Material in Kontakt kommt. Auf diese Art und Weise lässt sich ein von dem Heizsystem 27 bereitgestelltes Temperaturprofil besonders getreu auf das zu bearbeitende Material anwenden.

Fig. 4 zeigt den Aufbau des Heizsystems 27. Das Heizsystem 27 setzt sich aus mehreren Lagen zusammen, die entlang einer Stapelrichtung S übereinander liegen. Die Stapelrichtung S kann einer vertikalen Richtung entsprechen. Die Lagen des Heizsystems 27 erstrecken sich in zueinander parallelen Ebenen, die senkrecht zu der Stapelrichtung S stehen. Die beiden bezüglich der Stapelrichtung S äußersten Lagen des Heizsystems 27 werden in der dargestellten Ausführungsform jeweils durch eine Hygienelage 43 gebildet. Die Hygienelagen 43 können aus einem Material bestehen oder ein Material aufweisen, welches für Anwendungen im Lebensmittelbereich zugelassen ist. Zwischen den beiden Hygienelagen 43 können eine erste Heizlage 45 und eine zweite Heizlage 47 vorgesehen sein.

Die erste Heizlage 45 und die zweite Heizlage 47 können jeweils ein Substrat 49, 51 aufweisen. Das Substrat 49 der ersten Heizlage 45 kann identisch zu dem Substrat 51 der zweiten Heizlage 47 ausgebildet sein. Es können aber auch unterschiedliche Substrate verwendet werden. Das Substrat 49 der ersten Heizlage 45 und/oder das Substrat 51 der zweiten Heizlage 47 kann flexibel oder starr ausgebildet sein. Das Substrat 49 der ersten Heizlage 45 und/oder das Substrat 51 der zweiten Heizlage 47 kann beispielsweise von einer Folie gebildet sein. Die erste Heizlage 45 umfasst eine Heizeinrichtung 53. Die Heizeinrichtung 53 ist als elektrische Widerstandsheizeinrichtung ausgebildet. In der dargestellten Ausführungsform wird die Heizeinrichtung 53 von einer elektrisch leitfähigen Schicht gebildet, welche von dem Substrat 49 der ersten Heizlage 45 getragen wird. Die Heizeinrichtung 53 kann beispielsweise von einer elektrisch leitfähigen Lackschicht gebildet sein. Alternativ wäre beispielsweise denkbar, dass Heizdrahtwicklungen auf dem Substrat 49 der ersten Heizlage 45 vorgesehen sind und die Heizeinrichtung 53 bilden.

Die zweite Heizlage 47 umfasst eine Vielzahl von auf dem Substrat 51 der zweiten Heizlage 47 rasterartig angebrachten Heizelementen 55. Die Heizelemente 55 können als elektrische Widerstandsheizelemente ausgebildet sein. Die Heizelemente 55 sind in Fig. 4 lediglich schematisch dargestellt. Beispielsweise kann jedes der Heizelemente 55 eine oder mehrere Heizdrahtwindungen umfassen. Die Heizelemente 55 sind individuell ansteuerbar. Für die Ansteuerung der Heizelemente 55 ist eine Ansteuerungslage 57 vorgesehen, welche in der dargestellten Ausführungsform aus zwei einzelnen Lagen zusammengesetzt ist. Die Ansteuerungslage 57 umfasst Leitungen zur individuellen und voneinander unabhängigen Versorgung der Heizelemente 55 mit elektrischer Leistung. Das Heizsystem 27 umfasst zudem eine Elektronikschicht 59, welche Leistungskomponenten 61 und Elektronik 63 für den Betrieb des Heizsystems 27 aufweist. Die Elektronik 63 kann beispielsweise eine Steuerung für das Ansteuern der Heizeinrichtung 53 und das Ansteuern der Heizelemente 55 umfassen. Es wäre aber auch denkbar, dass das Ansteuern der Heizeinrichtung 53 und das Ansteuern der Heizelemente 55 von einer Steuerung 65 der Verpackungsmaschine 1 (siehe Fig. 1) oder einer Steuerung der Formstation 5 übernommen wird.

Die Heizeinrichtung 53 erstreckt sich senkrecht zu der Stapelrichtung S über einen größeren Bereich als ein einzelnes Heizelement 55. Wird ein Außenumfang der Heizeinrichtung 53 bezüglich der Stapelrichtung S auf die zweite Heizlage 47 projiziert, befinden sich innerhalb dieser Projektion mehrere der Heizelemente 55. Die Heizeinrichtung 53 überlappt bezüglich der Stapelrichtung S mehrere der Heizelemente 55. Zum Beheizen der Unterfolienbahn 13 können die Heizeinrichtung 53 und eines oder mehrere der Heizelemente 55 gleichzeitig aktiv sein. Die Heizeinrichtung 53 kann eine Grundheizleistung bereitstellen. Die Heizeinrichtung 53 kann eine im Wesentlichen gleichmäßig verteilte Heizleistung bereitstellen. Durch individuelles Ansteuern der in einem Raster angeordneten Heizelemente 55 kann ein auf die Eigenschaften der Unterfolienbahn 13 und/oder auf den Tiefziehvorgang abgestimmtes Heizmuster erzeugt werden. Beispielsweise können durch geeignetes Aktivieren oder Deaktivieren bestimmter Heizelemente 55 und/oder durch Anpassen der Heizleistung einzelner Heizelemente 55 bestimmte Bereiche der Unterfolienbahn 13 stärker beheizt werden als andere Bereiche der Unterfolienbahn 13. Hierdurch kann beispielsweise erreicht werden, dass beim Tiefziehen bestimmte Bereiche der Unterfolienbahn 13 stärker gedehnt werden als andere Bereiche. Beispielsweise können Bereiche der Unterfolienbahn 13, welche später Ecken oder Kanten der Verpackung bilden, weniger stark beheizt werden, damit die Ecken oder Kanten nicht mit einer zu geringen Materialstärke ausgebildet werden.

Die Lagen 43, 45, 47, 57, 59 des Heizsystems 27 können beispielsweise durch Laminieren oder Verschweißen miteinander verbunden sein.

In der beschriebenen Ausführungsform ist das Heizsystem 27 Teil der Formstation 5. Alternativ könnte das Heizsystem 27 auch in einer anderen Arbeitsstation der Verpackungsmaschine 1 vorgesehen werden, beispielsweise in der Vorheizstation 3 und/oder in der Siegelstation 7. Insbesondere könnte das Heizsystem 27 in das Siegelwerkzeugoberteil 23 integriert werden. Es wäre auch denkbar, dass das Heizsystem 27 in einer Vorheizstation zum Vorheizen der Oberfolie 21 vorgesehen ist. Es versteht sich, dass auch mehrere der Arbeitsstationen ein nach dem beschriebenen Konzept aufgebautes Heizsystem 27 aufweisen können.

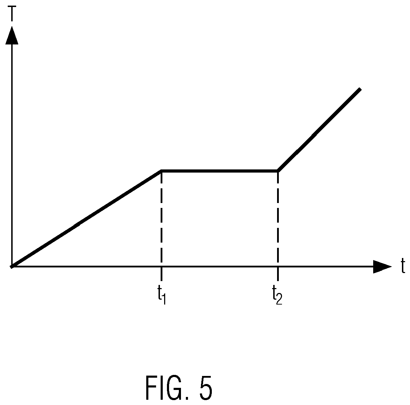

Die Arbeitsstation 3, 5, 7 kann einen Temperatursensor 67 umfassen, welcher eine Temperatur der Unterfolienbahn 13 und/oder der Oberfolie 21 bestimmt. Fig. 1 zeigt einen solchen Temperatursensor 67 an dem Siegelwerkzeugoberteil 23. Fig. 5 zeigt einen beispielhaften Verlauf der von dem Temperatursensor 67 gemessenen Temperatur während eines Beheizens der Unterfolienbahn 13 und der Oberfolie 21 durch das Heizsystem 27 in der Siegelstation 7. Bis zum Zeitpunkt t₁ steigt die Temperatur aufgrund des Beheizens durch das Heizsystem 27 im Wesentlichen linear an. Es sind in der Praxis natürlich Abweichungen von dem linearen Anstieg der Temperatur denkbar. Zum Zeitpunkt t₁ sind die Unterfolienbahn 13 und die Oberfolie 21 in dem entsprechenden Bereich soweit erhitzt, dass das Material der Unterfolienbahn 13 und der Oberfolie 21 einen Phasenübergang von fest nach flüssig vollzieht. Ist der Phasenübergang in dem entsprechenden Bereich im Wesentlichen vollständig abgelaufen, steigt ab dem Zeitpunkt t₂ die Temperatur wieder an. Durch das Analysieren des Zeitverlaufs der Ausgabe des Temperatursensors 67 beim Erhitzen der Unterfolienbahn 13 und/oder der Oberfolie 21 kann festgestellt werden, wann das Material schmilzt. Basierend auf dem Feststellen eines Phasenübergangs kann das Heizsystem 27 entsprechend angesteuert werden.

## Patentansprüche

1. Arbeitsstation (3, 5, 7) für eine Verpackungsmaschine (1) mit einem Heizsystem (27) zum Erwärmen eines bahnförmigen Materials (13, 21), wobei das Heizsystem (27) Folgendes umfasst:
eine erste Heizlage (45) mit einer Heizeinrichtung (53); und
eine zweite Heizlage (47) mit einer Vielzahl von Heizelementen (55);
wobei die zweite Heizlage (47) bezüglich der ersten Heizlage (45) ortsfest angebracht ist;
wobei die erste Heizlage (45) und die zweite Heizlage (47) bezüglich einer Stapelrichtung (S) übereinander vorliegen;
wobei mehrere der Heizelemente (55) innerhalb einer Projektion der Heizeinrichtung (53) bezüglich der Stapelrichtung (S) auf die zweite Heizlage (47) liegen;
wobei die Arbeitsstation (3, 5, 7) zudem einen Aufnahmeraum (20) für das bahnförmige Material (13, 21) umfasst; und
wobei die erste Heizlage (45), die zweite Heizlage (47) und der Aufnahmeraum (20) bezüglich der Stapelrichtung (S) übereinander liegen,
**dadurch gekennzeichnet, dass**
die erste Heizlage (45) und die zweite Heizlage (47) bezüglich der Stapelrichtung (S) auf derselben Seite des Aufnahmeraums (20) liegen.

2. Arbeitsstation nach Anspruch 1, wobei die Heizelemente (55) einzeln oder gruppenweise individuell ansteuerbar sind.

3. Arbeitsstation nach Anspruch 1 oder 2, wobei die Heizelemente (55) in der zweiten Heizlage (47) matrixartig oder rasterartig angeordnet sind oder jeweils unterschiedliche Heizkonturen definieren.

4. Arbeitsstation nach einem der vorangehenden Ansprüche, wobei die zweite Heizlage (47) bezüglich der Stapelrichtung (S) näher an dem Aufnahmeraum (20) liegt als die erste Heizlage (45).

5. Arbeitsstation nach einem der vorangehenden Ansprüche, wobei die zweite Heizlage (47) als Substrat (51) zum Aufnehmen der Heizelemente (55) ein Foliensubstrat oder eine Substratplatte aufweist.

6. Arbeitsstation nach einem der vorangehenden Ansprüche, wobei das Heizsystem (27) zudem eine Ansteuerungslage (57) umfasst, welche Komponenten zum Ansteuern der Heizeinrichtung (53) und/oder der Heizelemente (55) aufweist.

7. Arbeitsstation nach einem der vorangehenden Ansprüche, wobei das Heizsystem (27) zudem zumindest eine Hygienelage (43) umfasst, welche bezüglich einer Stapelung der Lagen des Heizsystems (27) in der Stapelrichtung (S) eine äußerste Lage bildet.

8. Arbeitsstation nach einem der vorangehenden Ansprüche, wobei die Lagen des Heizsystems (27) fest miteinander verbunden sind, insbesondere laminiert oder verschweißt.

9. Verfahren zum Herstellen einer Verpackung, umfassend:
Einbringen von bahnförmigem Material (13, 21) in einen Aufnahmeraum (20) einer Arbeitsstation (3, 5, 7) entlang einer Produktionsrichtung (P);
in der Arbeitsstation (3, 5, 7) Beheizen des bahnförmigen Materials (13, 21) mittels einer Heizeinrichtung (53); und
in der Arbeitsstation (3, 5, 7) Beheizen des bahnförmigen Materials (13, 21) mittels einer Vielzahl von Heizelementen (55);
wobei die Heizelemente (55) bezüglich der Heizeinrichtung (53) ortsfest angebracht sind;
wobei die Heizeinrichtung (53) bezüglich einer zu der Produktionsrichtung (P) senkrechten Stapelrichtung (S) mit der Vielzahl von Heizelementen überlappt (55); und
wobei die Heizeinrichtung (53), die Heizelemente (55) und der Aufnahmeraum (20) bezüglich der Stapelrichtung (S) übereinander liegen,
**dadurch gekennzeichnet, dass**
die Heizeinrichtung (53) und die Heizelemente (55) bezüglich der Stapelrichtung (S) auf derselben Seite des Aufnahmeraums (20) liegen.

10. Verfahren nach Anspruch 9, wobei die Heizelemente (55) zum Erzeugen eines gewünschten Beheizungsmusters für das bahnförmige Material (13, 21) einzeln oder gruppenweise individuell angesteuert werden.

11. Verfahren nach Anspruch 9 oder 10, wobei eine Heizleistung der Heizeinrichtung (53) und/oder eine Heizleistung der Heizelemente (55) basierend auf einer Ausgabe eines Temperatursensors (67) gesteuert wird, welcher eine Temperatur des bahnförmigen Materials (13, 21) misst.

12. Verfahren nach Anspruch 11, wobei die Heizleistung der Heizeinrichtung (53) und/oder die Heizleistung der Heizelemente (55) basierend auf einem Zeitverlauf der Ausgabe des Temperatursensors (67) gesteuert wird.

13. Verfahren nach Anspruch 11 oder 12, wobei basierend auf der Ausgabe des Temperatursensors (67) ein Phasenübergang in dem bahnförmigen Material (13, 21) erkannt wird und die Heizleistung der Heizeinrichtung (53) und/oder die Heizleistung der Heizelemente (55) basierend auf einem Erkennen des Phasenübergangs gesteuert wird.

14. Verwendung in einer Arbeitsstation (3, 5, 7) nach einem der Ansprüche 1-8, einer bezüglich einer Stapelrichtung (S) mit einer Vielzahl individuell ansteuerbarer Heizelemente (55) überlappenden flächigen und bezüglich der Heizelemente (55) ortsfest angebrachten Heizeinrichtung (53), um die zum Beheizen eines bahnförmigen Materials (13, 21) erforderliche Heizleistung der Heizelemente (55) in einer Verpackungsmaschine (1) zu reduzieren, wobei die Heizeinrichtung (53) und die Heizelemente (55) bezüglich der Stapelrichtung (S) auf derselben Seite eines Aufnahmeraums (20) für das bahnförmige Material (13, 21) liegen.

## Claims

1. A working station (3, 5, 7) for a packaging machine (1) having a heating system (27) for heating a web-shaped material (13, 21), the heating system (27) comprising:
a first heating layer (45) with a heating device (53); and
a second heating layer (47) with a plurality of heating elements (55);
wherein the second heating layer (47) is rigidly mounted with respect to the first heating layer (45);
wherein the first heating layer (45) and the second heating layer (47) are superposed with respect to a stacking direction (S);
wherein a plurality of the heating elements (55) is disposed on the second heating layer (47) within a projection of the heating device (53) with respect to the stacking direction (S);
wherein the working station (3, 5, 7) further comprises a receiving space (20) for the web-shaped material (13, 21); and
wherein the first heating layer (45), the second heating layer (47) and the receiving space (20) are superposed with respect to the stacking direction (S),
**characterized in that**
the first heating layer (45) and the second heating layer (47) are located on the same side of the receiving space with respect to the stacking direction (S).

2. The working station according to claim 1, wherein the heating elements (55) can be controlled individually as single elements or in groups.

3. The working station according to claims 1 or 2, wherein the heating elements (55) in the second heating layer (47) are arranged in a matrix-like or grid-like pattern or define respective different heating profiles.

4. The working station according to any one of the preceding claims, wherein the second heating layer (47) is closer to the receiving space (20) than the first heating layer (45) with respect to the stacking direction (S).

5. The working station according to any one of the preceding claims, wherein the second heating layer (47) includes a sheet substrate or a substrate plate as a substrate (51) for supporting the heating elements (55).

6. The working station according to any one of the preceding claims, wherein the heating system (27) further comprises a control layer (57) including components for controlling the heating device (53) and/or the heating elements (55).

7. The working station according to any one of the preceding claims, wherein the heating system (27) further comprises at least one hygienic layer (43) forming an outermost layer with respect to a stack of the layers of the heating system (27) in the stacking direction (S).

8. The working station according to any one of the preceding claims, wherein the layers of the heating system (27) are firmly connected to each other, in particular laminated or welded.

9. A method for manufacturing a package, comprising:
introducing web-shaped material (13, 21) into a receiving space (20) of a working station (3, 5, 7) along a production direction (P);
heating the web-shaped material (13, 21) in the working station (3, 5, 7) by means of a heating device (53); and
heating the web-shaped material (13, 21) in the working station (3, 5, 7) by means of a plurality of heating elements (55);
wherein the heating elements (55) are rigidly mounted with respect to the heating device (53);
wherein the heating device (53) overlaps the plurality of heating elements (55) with respect to a stacking direction (S) perpendicular to the production direction (P); and
wherein the heating device (53), the heating elements (55) and the receiving space (20) are superposed with respect to the stacking direction (S),
**characterized in that**
the heating device (53) and the heating elements (55) are located on the same side of the receiving space (20) with respect to the stacking direction (S).

10. The method according to claim 9, wherein the heating elements (55) are individually controlled as single elements or in groups to establish a desired heating pattern for the web-shaped material (13, 21).

11. The method according to claims 9 or 10, wherein a heating power of the heating device (53) and/or a heating power of the heating elements (55) is controlled on the basis of an output of a temperature sensor (67) measuring a temperature of the web-shaped material (13, 21).

12. The method according to claim 11, wherein the heating power of the heating device (53) and/or the heating power of the heating elements (55) is controlled on the basis of a time history of the output of the temperature sensor (67).

13. The method according to claim 11 or 12, wherein a phase transition in the web-shaped material (13, 21) is detected on the basis of the output of the temperature sensor (67) and wherein the heating power of the heating device (53) and/or the heating power of the heating elements (55) is controlled on the basis of a detection of the phase transition.

14. Use in a working station (3, 5, 7) according to any one of claims 1-8, of a planar heating device (1) having a plurality of individually controllable heating elements (55) overlapping with respect to a stacking direction and rigidly mounted with respect to the heating elements (55) for reducing the heating power of the heating elements (55) required for heating a web-shaped material (13, 21) in a packaging machine (1), wherein the heating device (53) and the heating elements (55) are located on the same side of a receiving space (20) for the web-shaped material (13, 21) with respect to the stacking direction (S).

## Revendications

1. Poste de travail (3, 5, 7) pour une machine d'emballage (1) comprenant un système de chauffage (27) pour chauffer un matériau en forme de bande (13, 21), le système de chauffage (27) comprenant les éléments suivants :
une première couche de chauffage (45) pourvue d'un dispositif de chauffage (53) ; et
une seconde couche de chauffage (47) pourvue d'une pluralité d'éléments de chauffage (55) ;
dans lequel la seconde couche de chauffage (47) est montée fixe par rapport à la première couche de chauffage (45) ;
dans lequel la première couche de chauffage (45) et la seconde couche de chauffage (47) sont superposées l'une sur l'autre par rapport à une direction d'empilement (S) ;
dans lequel plusieurs des éléments de chauffage (55) se trouvent à l'intérieur d'une projection du dispositif de chauffage (53) par rapport à la direction d'empilement (S) sur la seconde couche de chauffage (47) ;
dans lequel le poste de travail (3, 5, 7) comprend en outre un espace de réception (20) pour le matériau en forme de bande (13, 21) ; et
dans lequel la première couche de chauffage (45), la seconde couche de chauffage (47) et l'espace de réception (20) sont superposés par rapport à la direction d'empilement (S),
**caractérisé en ce que**
la première couche de chauffage (45) et la seconde couche de chauffage (47) se trouvent du même côté de l'espace de réception (20) par rapport à la direction d'empilement (S).

2. Poste de travail selon la revendication 1, dans lequel les éléments de chauffage (55) peuvent être commandés individuellement seuls ou par groupes.

3. Poste de travail selon la revendication 1 ou 2, dans lequel les éléments de chauffage (55) dans la seconde couche de chauffage (47) sont agencés sous forme de matrice ou de grille ou définissent des contours de chauffage différents.

4. Poste de travail selon l'une quelconque des revendications précédentes, dans lequel la seconde couche de chauffage (47) est plus proche de l'espace de réception (20) que la première couche de chauffage (45) par rapport à la direction d'empilement (S).

5. Poste de travail selon l'une quelconque des revendications précédentes, dans lequel la seconde couche de chauffage (47) comprend un substrat en feuille ou une plaque de substrat en tant que substrat (51) pour recevoir les éléments de chauffage (55).

6. Poste de travail selon l'une quelconque des revendications précédentes, dans lequel le système de chauffage (27) comprend en outre une couche de commande (57) qui présente des composants pour commander le dispositif de chauffage (53) et/ou les éléments de chauffage (55).

7. Poste de travail selon l'une quelconque des revendications précédentes, dans lequel le système de chauffage (27) comprend en outre au moins une couche d'hygiène (43) qui forme la couche la plus extérieure par rapport à un empilement des couches du système de chauffage (27) dans la direction d'empilement (S).

8. Poste de travail selon l'une quelconque des revendications précédentes, dans lequel les couches du système de chauffage (27) sont reliées entre elles de manière fixe, en particulier par stratification ou soudage.

9. Procédé de fabrication d'un emballage, comprenant les étapes consistant à :
introduire un matériau en forme de bande (13, 21) dans un espace de réception (20) d'un poste de travail (3, 5, 7) le long d'une direction de production (P) ;
dans le poste de travail (3, 5, 7), chauffer le matériau en forme de bande (13, 21) au moyen d'un dispositif de chauffage (53) ; et
dans le poste de travail (3, 5, 7), chauffer le matériau en forme de bande (13, 21) au moyen d'une pluralité d'éléments de chauffage (55) ;
dans lequel les éléments de chauffage (55) sont montés de manière fixe par rapport au dispositif de chauffage (53) ;
dans lequel le dispositif de chauffage (53) chevauche (55) la pluralité d'éléments de chauffage par rapport à une direction d'empilement (S) perpendiculaire à la direction de production (P) ; et
dans lequel le dispositif de chauffage (53), les éléments de chauffage (55) et l'espace de réception (20) sont superposés par rapport à la direction d'empilement (S),
**caractérisé en ce que**
le dispositif de chauffage (53) et les éléments de chauffage (55) se trouvent du même côté de l'espace de réception (20) par rapport à la direction d'empilement (S).

10. Procédé selon la revendication 9, dans lequel les éléments de chauffage (55) sont commandés individuellement seuls par groupes pour générer un modèle de chauffage souhaité pour le matériau en forme de bande (13, 21).

11. Procédé selon la revendication 9 ou 10, dans lequel une puissance de chauffage du dispositif de chauffage (53) et/ou une puissance de chauffage des éléments de chauffage (55) sont commandées sur la base d'une sortie d'un capteur de température (67) qui mesure une température du matériau en forme de bande (13, 21).

12. Procédé selon la revendication 11, dans lequel la puissance de chauffage du dispositif de chauffage (53) et/ou la puissance de chauffage des éléments de chauffage (55) sont commandées sur la base d'une évolution dans le temps de la sortie du capteur de température (67).

13. Procédé selon la revendication 11 ou 12, dans lequel une transition de phase est détectée dans le matériau en forme de bande (13, 21) sur la base de la sortie du capteur de température (67) et la puissance de chauffage du dispositif de chauffage (53) et/ou la puissance de chauffage des éléments de chauffage (55) sont commandées sur la base d'une détection de la transition de phase.

14. Utilisation dans un poste de travail (3, 5, 7) selon l'une quelconque des revendications 1 à 8 d'un dispositif de chauffage (53) plat chevauchant une direction d'empilement (S) avec une pluralité d'éléments de chauffage (55) pouvant être commandés individuellement et monté de manière fixe par rapport aux éléments de chauffage (55) pour réduire la puissance de chauffage nécessaire pour chauffer un matériau en forme de bande (13, 21) des éléments de chauffage (55) dans une machine d'emballage (1), dans laquelle le dispositif de chauffage (53) et les éléments de chauffage (55) se trouvent du même côté d'un espace de réception (20) pour le matériau en forme de bande (13, 21) par rapport à la direction d'empilement (S).
